# EUROPÄISCHE PATENTSCHRIFT

(11) **EP 2 511 132 B1**
(45) Veröffentlichungstag und Bekanntmachung des Hinweises auf die Patenterteilung: **20.05.2015**
(21) Anmeldenummer: 12001552.4
(22) Anmeldetag: 07.03.2012
(51) Int. Cl.: B60P 3/34, B60P 3/36, B60R 15/00

(54) **Wohnmobil mit Sanitärzellen-Pendeltür**
Mobile home with sanitary cell swing door
Mobile home doté d'une porte battante à cellules sanitaires

(30) Priorität: 15.04.2011 DE 202011005274 U; 16.06.2011 DE 102011106604
(43) Veröffentlichungstag der Anmeldung: 17.10.2012
(73) Patentinhaber: Knaus Tabbert GmbH, 94118 Jandelsbrunn (DE)
(72) Erfinder: Marcon, Giovanni, 94065 Waldkirchen (DE); Horvath, Robert, 94078 Freyung (DE)
(74) Vertreter: advotec.

(56) Entgegenhaltungen:
- DE-B- 1 192 937
- DE-U- 7 102 918
- DE-U1- 20 205 672
- DE-U1-202008 006 176
- FR-A1- 2 552 721
- FR-A1- 2 805 838
- GB-A- 1 049 235

## Beschreibung

Die Erfindung betrifft ein Fahrzeug, insbesondere Wohnmobil oder Wohnwagen, mit einem Wohnbereich, einem Sanitärbereich und einem am Sanitär- und Wohnbereich angrenzenden Korridorbereich, wobei mittels eines Türelements die Bereiche in verschiedenen Schließstellungen voneinander getrennt werden können, gemäß dem Oberbegriff des Anspruchs 1.

Bei Wohnmobilen ist bekanntlich der zur Verfügung stehende Platz knapp bemessen. Weiterhin gilt es, insbesondere den Wohnbereich des Wohnmobils möglichst groß zu gestalten und die weiteren lediglich funktional erforderlichen Einrichtungen auf das Minimum zu beschränken. Dieses wiederum schränkt jedoch mitunter die Benutzbarkeit derartiger Einrichtungen ein. Dieses betrifft insbesondere den Sanitärbereich, welcher hierbei verschiedene Einrichtungen aufweisen kann. Dieses ist zum einen eine Dusche, eine Toilette und/oder ein Waschbecken. Ebenso können weitere Einrichtungsgegenstände dem Sanitärbereich zugeordnet sein. Wird nun der Raum für den Sanitärbereich minimal bemessen, ist die Benutzbarkeit jedoch vielfach unzulässig eingeschränkt.

Zur Lösung dieses Problems ist es aus dem Stand der Technik bekannt, eine Tür des Sanitärbereichs derartig einzusetzen, dass diese in zwei verschiedene Schließstellungen geschlossen werden kann und somit in einer ersten Schließstellung der Sanitärbereich vom Korridorbereich getrennt ist und in einer zweiten Schließstellung der Korridoibereich vom Wohnbereich getrennt ist. Bei einer derartigen Lösung, wie diese in der Schrift DE 203 11 839 U 1 vorgestellt wird, ist der Sanitärbereich zwar bei geschlossener Pendeltür auf beengtem Raum nutzbar und aber ebenso bei zum Wohnbereich hin geschlossener Tür auf erweitertem Raum, wobei hierzu ebenso der Korridorbereich zur Verfügung steht.

Wenngleich durch diese Lösung der Eindruck des beengten Sanitärbereichs durch ein Schließen der Tür zum Wohnbereich entgegengewirkt werden kann, wird beispielsweise bei Benutzung der Toilette die Tür zum Korridorbereich geschlossen sein und insofern ein knapp bemessener Bewegungsraum zur Verfügung stehen. Dennoch ist dieser knapp bemessene Raum in Zeiten der Nichtbenutzung zur anderweitigen Verwendung als Wohnbereich verschwendet.

Die Druckschrift DE 202 05 672 U1 offenbart eine Variation der Größe des Sanitärbereichs mittels einer Tür in Tür Lösung. In diesem Fall ist zunächst einmal ein Türrahmen mittels eines Scharniers im Raumeck von Wohnbereich, Sanitärbereich und Korridorbereich schwenkbar gelagert. Im Türrahmen wiederum ist eine Tür schwenkbar angelenkt, wobei sich die Schwenkachse der Tür am Türrahmen auf der gegenüberliegenden Seite bezüglich der Schwenkachse des Türrahmens im Raumeck befindet. Unabhängig von der Stellung des Türrahmens kann die Tür geöffnet und geschlossen werden, wobei der Türrahmen zwei Schließstellungen ermöglicht. In einer ersten Schließstellung kann der Türrahmen samt Tür den Sanitärbereich auf kleinem aber nutzbarem Raum gegenüber dem Korridorbereich und in einer zweiten Schließstellung kann der Türrahmen samt Tür den Korridorbereich zum Wohnbereich abtrennen und somit einen vergrößerten Raum aus Sanitärbereich und Korridorbereich ermöglichen.

Wenngleich vorbenannte Ausführung ein Öffnen der Tür gegenläufig zum Türrahmen in vorteilhafter Richtung ermöglicht und zudem die Durchgangsbreite des Korridorbereichs nicht auf die Breite einer kleinen Tür reduziert werden muss, besitzt diese Ausführung jedoch den entscheidenden Nachteil, dass der Sanitärbereich nicht für die Zeiten der Nichtbenutzung auf einen minimalen Raum reduziert werden kann. Diesem versucht die Ausführung aus DE 71 02 918 U dadurch zu begegnen, indem ein vorderer Wandabschnitt mit verbundenem seitlichen Wandabschnitt linear nach vorne in den Korridorbereich gezogen und umgekehrt zurück geschoben werden kann. Im Eck zwischen Sanitärbereich, Korridorbereich und Wohnbereich ist ein weiteres schwenkbares Wandelement schwenkbar gelagert, welches am vorderen Wandabschnitt in einer Schiebeführung gelagert ist.

Problematisch in vorheriger Ausführung ist das gleichzeitige Verschieben in zwei Linearführungen, zwischen seitlichem Wandabschnitt und feststehender Seitenwand sowie zwischen vorderem Wandabschnitt und schwenkbarem Wandabschnitt, was die Gefahr eines Klemmens begünstigt.

Die Variation der Raumgröße des Sanitärbereichs kann ebenfalls durch eine in FR 2 805 838 A1 offenbarte Ausführung variiert werden, wobei die Tür aus zwei zueinander schwenkbaren Türhälften besteht. Die Türhälften können hierbei einerseits derart geschwenkt werden, dass das verbindende Scharnier zur Mitte des Sanitärbereichs weist, während in einer umgekehrten Stellung der Türhälften das Scharnier nach außen positioniert ist.

Nachteilig bei vorheriger Ausführung ist zum einen, dass eine Verstellung zwischen den beiden Schließstellungen einen großen Schwenkraum für die Türhälften erfordert. Anderseits kann durch die doppelt schwenkbare gelagerte Türhälfte der Eindruck einer Instabilität entstehen.

Ein Mehrzweck-Sanitärbereich für ein Wohnmobil wird in der Schrift DE 20 2005 013 228 U1 offenbart. Hierbei ist auf einer Seite des Wohnmobils ein Sanitärbereich mit Waschbecken und Toilette vorgesehen. Gegenüberliegend auf anderer Seite des Wohnmobils befindet sich ein Duschbereich. Sowohl der Sanitärbereich als auch der Duschbereich ist in dieser Ausführung mit jeweils einer vorderen und einer hinteren gegenüberliegend angelenkten Tür ausgestattet. Hierbei ermöglichen die Türen zunächst einmal den Verschluss der beiden Bereiche auf kleinstem Raum durch ein jeweils gegenläufiges Schließen der vorderen und hinteren Türen. Weiterhin können sowohl die vorderen Türen als auch die hinteren Türen jeweils gegenläufig unter Einschluss des Korridorbereichs in einen vergrößerten Dusch- und Sanitärbereich geschlossen werden. Eine weitere Schließstellung wird durch ein zusätzliches, am freien Ende der vorderen Tür des Sanitärbereichs schwenkbar angelenktes Türelement ermöglicht. Hierbei kann das zusätzliche Türelement in Anlage an die hintere Tür des Sanitärbereichs den Sanitärbereich unter Einschluss eines Abschnitts des Korridorbereichs abschließen.

Eine hierzu vergleichbare Lösung skizziert die Schrift DE 11 92 937 A. Hierbei weist der Sanitärbereich sowohl an der vorderen als auch an der hinteren Tür jeweils ein zusätzliches schwenkbar gelagertes Türelement auf, wodurch eine Variation des von den Türen mit oder ohne Verwendung der zusätzlichen Türelemente abschließbaren Raumes ermöglicht wird.

Nachteilig bei zuvor benannten Ausführungsformen ist jedoch aufgrund der freien Schwenkbarkeit der Türen sowie insbesondere des bzw. der zusätzlichen pendelnd gelagerten Türelemente zum einen die Handhabbarkeit. Besonders problematisch ist das Schließen der Türen des vergrößerten Sanitärbereichs, da in diesem Fälle drei bzw. vier schwenkbare Türen bzw. Türelemente zueinander richtig positioniert werden müssen, damit ein Verschließen erfolgen kann. Zum andern ist aufgrund der allgemeinen Gewichts- und Kostenrestriktionen bei den zuvor genannten Ausführungen aus der Betrachtungsweise des Nutzers ein labiler Eindruck von den leicht zu bauenden Türen und Türelementen insbesondere aufgrund der doppelten freien Schwenkbarkeit kaum vermeidbar. Weiterhin nachteilig ist, dass für jede Schließstellung eine andere Schließsituation vorliegt, wodurch die entsprechenden Türen bzw. das zusätzliche Türelement mehrfach mit entsprechenden Schließmechanismen ausgerüstet werden müssen.

Insofern ist es Aufgabe der vorliegenden Erfindung, die Raumgröße des Sanitärbereichs auf ein Minimum zu reduzieren und dennoch die Gebrauchbarkeit zu gewährleisten und hierbei die Nachteile vorheriger Lösungen zu überwinden..

Die vorliegende Aufgabe wird durch eine erfindungsgemäße Ausgangsform gemäß des Anspruchs 1 gelöst.

Vorteilhafte Ausführungsformen sind Gegenstand der Unteransprüche.

Ein gattungsgemäßes Fahrzeug, insbesondere Wohnmobil oder Wohnwagen, weist einen Wohnbereich, einen Sanitärbereich und einen am Sanitär- und Wohnbereich angrenzenden Korridorbereich auf. Die Art der Einrichtung und der Verwendung der drei Bereiche ist hierbei zunächst unerheblich. Wesentlich ist, dass es die drei verschiedenen Bereiche gibt, die in verschiedenen Situationen voneinander abzutrennen sind. Hierzu umfasst das Fahrzeug ein Türelement, welches mittels eines Türscharniers im Eck der drei Bereiche, d.h. von Wohn-, Sanitär- und Korridorbereich, schwenkbar gelagert ist. Hierbei kann das Türelement in einer ersten Schließstellung unter räumlicher Trennung von Sanitär- und Korridorbereich unter Anlage des Türelements an einem ersten Türrahmenelement geschlossen werden. In diesem Falle ist der Sanitärbereich mittels des Türelements sowie umgebender Wandelemente von den weiteren Bereichen, d. h. dem Wohnbereich sowie dem Korridorbereich abgetrennt. Darüber hinaus kann das Türelement in einer zweiten Schließstellung unter räumlicher Trennung von Korridorbereich und Wohnbereich unter Anlage des Türelements an einem zweiten Türrahmenelement geschlossen werden. In diesem Falle sind der Sanitärbereich zusammen mit dem Korridorbereich vom Wohnbereich mittels des Türelements sowie weiterer Wandelemente abgetrennt. Insofern kann in zweiter Schließstellung der vollständige Korridorbereich zusätzlich bei Nutzung des Sanitärbereichs begangen werden.

Erfindungsgemäß wird nunmehr das erste Türrahmenelement an einem verschieb- und/oder schwenkbaren Trennelement angeordnet. D. h., dass das Türrahmenelement nicht feststehendes Bauteil einer Wand des Sanitärbereichs ist, sondern gleichfalls beweglich ausgeführt ist. Hierbei ist das erste Türrahmenelement bzw. das Trennelement zwischen einer zurückgesetzten Ruhestellung und einer hervorstehenden Nutzstellung verstellbar. Dabei ist sowohl in der Ruhestellung als auch in der Nutzstellung das Türelement in der ersten Schließstellung schließbar. D.h. die erste Schließstellung kennzeichnet sich dadurch, dass der Sanitärbereich einen abgeschlossenen Raum mittels Seitenwände, dem Trennelement und dem Türelement unter Trennung von den umgebenden Bereichen bildet. Wenn sich das Türrahmenelement in der zurückgesetzten Ruhestellung befindet überstreicht hierbei das Türelements beim Schließen in die erste Schließstellung einen größeren Schwenkwinkel als es der Fall ist, wenn sich das Türrahmenelement in der Nutzstellung befindet. Unabhängig von der Stellung des Trennelements kann das Türelement in der zweite Schließstellung geschlossen werden, wobei hier Sanitärbereich und Korridorbereich einen größeren offenen Bereich bilden.

Durch diese neu geschaffene erfindungsgemäße Ausführung gelingt es, dass der abgeschlossene Raum des Sanitärbereichs in der Ruhestellung auf ein Minimum verkleinert wird und im Ergebnis der zu Wohnzwecken zur Verfügung stehende Bereich, d.h. der Korridorbereich, vergrößert wird. Bei dieser Stellung ist es jedoch nicht mehr vorgesehen, dass der Sanitärbereich uneingeschränkt verwendbar ist, wenngleich auch derartige Raumaufteilungen möglich sind. Vielmehr dient diese zurückgesetzte Ruhestellung des Trennelements unter Schließung des Türelements in erster Schließstellung der Gewinnung des möglichst großen Wohn- und Korridorbereichs sowie möglichst großer freier Durchgänge bei Nichtverwendung des Sanitärbereichs. Um eine Verwendbarkeit des Sanitärbereichs dennoch zu ermöglichen, wird das Trennelement nebst dem Türrahmenelement in die hervorstehende Nutzstellung verbracht. Wiederum kann das Türelement in die erste Schließstellung geschlossen werden, wobei nunmehr die Raumgröße des Sanitärbereichs größer ausfällt als bei der Ruhestellung und hierbei dessen Verwendbarkeit gewährleistet ist.

Besonders vorteilhaft ist es hierbei, wenn in erster Schließstellung das Raumvolumen des Sanitärbereichs in der Nutzstellung um mindestens 10% größer ist als in der Ruhestellung und dass die freibegehbare Grundfläche des Sanitärbereichs in der Nutzstellung um mindestens 25% größer ist als in der Ruhestellung. Insbesondere durch die Erweiterung der freibegehbaren Grundfläche wird es ermöglicht, dass bei Nichtverwendung ein minimales Raumvolumen vom Sanitärbereich beansprucht wird und dennoch zur Verwendung in der Nutzstellung die ausreichende Grundfläche zur freien Beweglichkeit innerhalb des Sanitärbereichs gegeben ist.

Vorteilhaft ist es, wenn das Trennelement in und/oder an einer Seitenwandung des Sanitärbereichs angeordnet ist und parallel zur Seitenwandung verschoben werden kann. Hierbei ist es nicht zwingend erforderlich, dass das Trennelement in einer linearen Bewegung verschoben wird bzw. als ein ebenes Element ausgeführt ist. Ebenso ist es denkbar, dass die Seitenwandung an sich eine gewölbte Struktur aufweist und/oder dass das Trennelement in einer Bogenform aus der Seitenwandung herausverschoben wird. Zumindest ist vorgesehen, dass das Trennelement in der Ruhestellung möglichst an bzw. in der Seitenwandung des Sanitärbereichs platzsparend untergebracht ist und nur zur Nutzung in die Nutzstellung aus bzw. von der Seitenwandung herausgezogen wird.

Besonders vorteilhaft ist es hierbei, wenn das Trennelement in Art einer Schiebetür ausgeführt ist. Wie die Führung des Trennelements und die Lagerung erfolgt, ist hierbei zunächst nebensächlich. Insofern wird der Fachmann eine für Wohnmobile entsprechende geeignete Bauweise wählen.

Erfindungsgemäß ist es vorgesehen, dass das Türelement in zwei verschiedenen Stellungen am Türrahmenelement - der Ruhestellung und der Nutzstellung - zur Anlage gebracht werden kann, wobei somit der Sanitärbereich mittels dem Türelement und dem Trennelement abgetrennt wird. Hieraus resultierend ergeben sich zwei verschiedene Winkelstellungen zwischen dem Trennelement, an welchem sich das Türrahmenelement befindet und dem Türelement. Weiterhin bewegt sich das Türelement aufgrund der Lagerung im Türscharnier auf einer Kreisbewegung, was wiederum zu einem unterschiedlichen Abstand zu einem beispielsweise auf einer geraden Linie bewegten Trennelement führt. Daher ist es vorteilhaft, wenn das Türscharnier sowohl in der Ruhestellung als auch der Nutzstellung des Trennelements den gleichen Abstand zum Türrahmenelement aufweist. Dieses ist gegeben, wenn sich das Türscharnier auf einer Mittelsenkrechten zu einer Verbindungslinie des Türrahmenelements in den beiden Positionen befindet. D.h. der Schwenkwinkel des Türelements ausgehend von der Mittelsenkrechten zu den beiden Schließpositionen am Türrahmenelement ist gleich groß.

Besonders vorteilhaft ist es, wenn zugleich mit dem Schwenken des Türelements das Trennelement von der Nutzstellung in die Ruhestellung unter Beibehaltung der ersten Schließstellung verschoben werden kann. D. h., dass bei in erster Schließstellung geschlossenem Türelement ausgehend von dem Trennelement in der Nutzstellung das Türelement weiter geschwenkt werden kann und hierbei das Trennelement zurückwandert bis in die Ruhestellung. Insofern kann beispielsweise beim Verlassen des Sanitärbereichs ausgehend von dem Trennelement in Nutzstellung das Türelement in erster Schließstellung geschlossen werden und durch Druck von außen auf das Türelement dieses unter gleichzeitigem Verschieben des Trennelements weitergeschwenkt werden bis das Trennelement die Ruhestellung erreicht.

Hierbei ist es vorteilhaft, wenn zumindest um das Maß einer Segmenthöhe, resultierend aus der Schwenkbewegung des Türelements in erster Schließstellung, sich das Türelement relativ zum Türrahmenelement und/oder sich das Türrahmenelement relativ zum Trennelement und/oder sich das Trennelement bewegen kann. Da das Trennelement in aller Regel nicht derart ausgeführt werden kann, dass dieses auf einem Kreiszylinder um das Türscharnier angeordnet und verschoben werden kann, führt ein Schwenken des Türelements zwangsläufig zu einer Abstandsänderung zum Türrahmenelement, sofern keine besonderen Maßnahmen getroffen werden. Jedoch ist es entsprechend vorteilhaft, wenn trotz der geometrisch bedingten Abstandsänderung in der Bewegung von der Nutzstellung in die Ruhestellung die erste Schließstellung beibehalten werden kann, um somit ein Verstellen von Türelement nebst dem Trennelement von der Nutzstellung in die Ruhestellung gewährleisten zu können.

Wenn ein hinreichendes Spiel zwischen dem Türelement und dem Türrahmenelement unschädlich zur Gewährleistung der ersten Schließstellung ist, kann in einer ersten Variante mittels diesen Spiels die Abstandsänderung beim Schwenken von Nutzstellung in Ruhestellung ausgeglichen werden. In einer zweiten Variante ist es denkbar, dass das Türrahmenelement nicht starr am Trennelement angebracht ist, sondern gleichfalls beweglich zu diesem ausgeführt ist. Insofern wäre es denkbar, dass das Türrahmenelement am Trennelement gelagert ist, wobei die durch die Abstandsänderung bedingte Verschiebung zu einer Verschiebung des Türrahmenelements relativ am Trennelement führt. Hierbei wäre es beispielsweise möglich, das Türrahmenelement seinerseits mittels eines Scharniers elastisch unterstützt am Trennelement anzubringen. Weiterhin ist es in einer dritten Variante möglich, dass das Trennelement sich beim Verschieben von der Nutzstellung in die Ruhestellung im Wesentlichen quer zur Bewegungsrichtung des Trennelements, d. h. in der Ebene des Türelements um das Maß der Abstandsänderung bewegen kann. Insofern wäre es denkbar, bei Ausführung des Trennelements in Art einer Schiebetür, diese nicht auf einer linearen Bahn auszufahren, sondern eine Bahnbogenbewegung der erforderlichen Position des Türrahmenelements in Anlage am schwenkenden Türelement folgend zu ermöglichen. Weiterhin können verschiedene Kombinationen der zuvor beschriebenen Varianten zum Ausgleich der Segmenthöhe gewählt werden.

In einer zur einer Schiebewand alternativen Ausführungsform wird das Trennelement mittels eines Trennelementscharniers schwenkbar gelagert. Hierbei befindet sich das Trennelementscharniers an einem zum Korridorbereich weisenden Ende einer Seitenwandung des Sanitärbereichs. In die Ruhestellung wird hierbei das Trennelement zum Sanitärbereich geschwenkt. Hierbei befindet sich das Türrahmenelement des Trennelements näher an der Fahrzeugaußenseite als das Trennelementscharnier. Hingegen wird in die Nutzstellung das Trennelement in den Korridorbereich geschwenkt, so dass sich das Trennelementscharniers näher zur Fahrzeugaußenseite als das Türrahmenelement befindet.

Wenngleich im Gegensatz zu einer Lösung mit einer Scheibetrennwand mit einem an einem Trennelementscharnier gelagerten Trennelement ein freier Durchgang durch den Korridorbereich, nicht in dem Maße in der Ruhestellung des Trennelements verbreitet werden kann, so hat diese Ausführung den Vorteil, dass die Scharnierlagerung einen geringeren Einstellaufwand erfordert, als bei beispielsweise einer Ausführung in Art einer Schiebetür.

Hierbei ist es besonders vorteilhaft, wenn das Trennelement in Art einer Pendeltür ausgeführt ist und somit auf bewährte und vorhandene Ausführungen insbesondere für das Trennelementscharnier zurückgegriffen werden kann. Hierbei ist neben der Anpassung der Baugröße lediglich das Türrahmenelement an die besondere Schließsituation anzupassen, bei der das Türelement in den zwei verschiedenen Stellungen von Türelement und Trennelement in erster Schließstellung am Türrahmenelement zur Anlage kommt und den Sanitärbereich abschließt.

Zur Realisierung der beiden Stellungen Ruhestellung und Nutzstellung des Trennelements ist es besonders vorteilhaft, wenn in der jeweiligen Stellung die Schwenkbewegung des Trennelements in einer Richtung durch ein Widerlager begrenzt wird. D.h., dass in der Bewegung des Trennelements zwischen der Ruhestellung und der Nutzstellung das Trennelement am Ende der Schwenkbewegung jeweils an dem Widerlager anschlägt. Die jeweils entgegen gesetzte Schwenkbewegung des Trennelements aus der Ruhestellung oder der Nutzstellung heraus wird besonders vorteilhaft und in einfacher Weise durch die Anlage des Türelements am Türrahmenelement verhindert. Insofern wird das Trennelement in den beiden Stellungen jeweils zwischen dem Widerlager und dem Türelement eingeschlossen, so dass eine Schwenkbewegung in erster Schließstellung verhindert ist.

Zur Erzielung einer größeren Nutzbarkeit des Fahrzeuges ist es vorteilhaft, wenn an den Korridorbereich und an den Sanitärbereich ein Schlatbereich angrenzt, wobei das Trennelement zwischen Sanitärbereich und Schlafbereich angeordnet ist. Insofern erfolgt durch die Verstellung des Trennelements in Ruhestellung und in Nutzstellung eine unterschiedliche Abgrenzung zwischen dem Schlafbereich und dem Korridorbereich, wobei entsprechend in der Ruhestellung ein größerer Durchgang zum Schlafbereich gegeben ist, als in der Nutzstellung. Unerheblich ist hierbei, ob sich das Türelement in erster Schließstellung befindet und somit den Sanitärbereich abschließt. Der Begriff "Schlafbereich" ist nicht zwingend auf ein Schlafzimmer reduzierend zu verstehen. Vielmehr kann dieser Bereich für beliebige andere Wohnzwecke vorgesehen sein. Ebenso kann sich im "Wohnbereich," das Schlafzimmer befinden und im "Schlafbereich" der Bereich zum gewöhnlichen Aufenthalt. Wesentlich bei der Betrachtung ist lediglich, dass es zwei Bereiche zu Wohnzwecke gibt, welche über einen Korridor verbunden sind und zwischen denen an den Korridor grenzend ein Sanitärbereich angeordnet ist. Weiterhin muss der "Korridorbereich" nicht zwingend ein optisch und funktional abgrenzbare Bereich sein. Dieser kann ebenso beispielsweise ohne deutliche Trennung in den Schlafbereich übergehen.

Hierbei ist es besonders vorteilhaft, wenn der Schlafbereich durch das Trennelement und ein schieb- und/oder schwenk- und/oder faltbares Raumteilerelement vom Korridorbereich abgetrennt werden kann. Insofern kann zur Abtrennung des Schlafbereichs vom übrigen Bereich zum einen das verschiebbare Trennelement sowie ergänzend ein Raumteilerelement Verwendung finden. Beispielsweise ist es insofern möglich, eine gegenüber dem Trennelement angeordnete Schiebetür als Raumteilerelement einzusetzen, welche insofern zum Abtrennen des Schlafbereichs gegen das Trennelement in Nutzstellung geschoben wird.

Ein größerer Wohnkomfort kann erreicht werden, wenn beim Fahrzeug in vorteilhafter Weise angrenzend zum Korridorbereich auf der dem Sanitärbereich gegenüberliegenden Seite ein Duschbereich angeordnet ist. Hinsichtlich der Anordnung der Sanitäreinrichtungen im Sanitär- und Duschbereich gibt es vielfache Möglichkeiten. Hierbei ist der Begriff "Duschbereich" nicht zwingend darauf beschränkt zu sehen, dass dort ausschließlich die Dusche angeordnet ist und im Sanitärbereich, wie in der Regel vorgesehen, ein Waschbecken sowie die Toilette. Ebenso ist es möglich, den Sanitärbereich mit Toilette und Dusche auszustatten und den Duschbereich vielmehr als Waschbereich auszuführen. Gleichfalls wäre es denkbar, den Duschbereich mit der Toilette auszustatten und den Sanitärbereich mit der Dusche sowie mit dem Waschbecken. Ebenso kann die erfindungsgemäße Ausführung dahingehend Verwendung finden, dass der in diesem Zusammenhang verwendete Begriff "Sanitärbereich" die Dusche enthält und der "Duschbereich" das Wachbecken und die Toilette. Zumindest ist vorgesehen, dass in der vorteilhaften Ausführung der Duschbereich mittels eines schieb- und/oder schwenk- und/oder faltbaren Verschlusselements vom Korridorbereich getrennt werden kann. Insofern kann mittels des Verschlusselements ein abgeschlossener Duschbereich geschaffen werden. Dieser ist insofern bei Verschluss des Verschlusselements vom Korridorbereich sowie dem Wohnbereich und - falls vorhanden - vom Schlafbereich abgegrenzt.

Besonders vorteilhaft ist es hierbei, wenn das Verschlusselement eine schwenkbare Duschtür ist, wobei ein Duschtürscharnier im Eck von Korridor-, Dusch- und Schlafbereich angeordnet ist. Hierbei kann die Duschtür in einer ersten Türstellung den Duschbereich vom Korridorbereich trennen und in einer zweiten Türstellung am ersten Türrahmenelement in der Nutzstellung anliegen und somit zusammen mit dem Trennelement den Dusch-, Korridor- und Sanitärbereich vom Schlafbereich abtrennen. Insofern wird durch diese besonders vorteilhafte Lösung ein besonders großer Sanitär-/Duschbereich geschaffen, welcher bei Stellung des ersten Türelements in zweiter Schließstellung eine Trennung zum Wohnbereich sowie eine Trennung zum Schlafbereich bewirkt.

Ein Ausführungsbeispiel eines erfindungsgemäßen Fahrzeugs sowie die verschiedenen Stellungen des Türelements und des Verschlusselements werden bei verschiedenen Ausführungsvarianten in den nachfolgenden Figuren beispielhaft skizziert.

Es zeigen:
- Fig. 1: ein Fahrzeug 01 als Wohnmobil mit verschiedenen Bereichen 02-06 sowie ein in verschiedene Stellungen schwenkbares Türelement 10;
- Fig. 2: einen Ausschnitt des Fahrzeugs aus Figur 1 mit dem Türelement 10a in erster Schließstellung in Ruheposition;
- Fig. 3: einen Ausschnitt aus Figur 1 mit dem Türelement 10b in erster Schließstellung in Nutzstellung;
- Fig. 4: einen Ausschnitt aus Figur 1 mit dem Türelement 10c in zweiter Schließstellung sowie dem Trennelement 16a in Ruhestellung;
- Fig. 5: eine Erläuterung zur Segmenthöhe 22 aufgrund des Schwenkens des Türelements 10a, 10b von Ruhestellung in Nutzstellung;
- Fig. 6: eine alternative Ausführung mit einem Duschbereich 06 mit einer schwenkbaren Duschtür 25a in erster Türstellung;
- Fig. 7:: zur Ausführung gemäß Figur 6 die Duschtür 25c in zweiter Türstellung sowie dem Türelement 10c in zweiter Schließstellung;
- Fig. 8: eine alternative Ausführung eines Trennelements 31a als Pendeltür in der Ruhestellung;
- Fig. 9: die alternative Ausführung des Trennelements 31b zu Fig. 8 in der Nutzstellung.

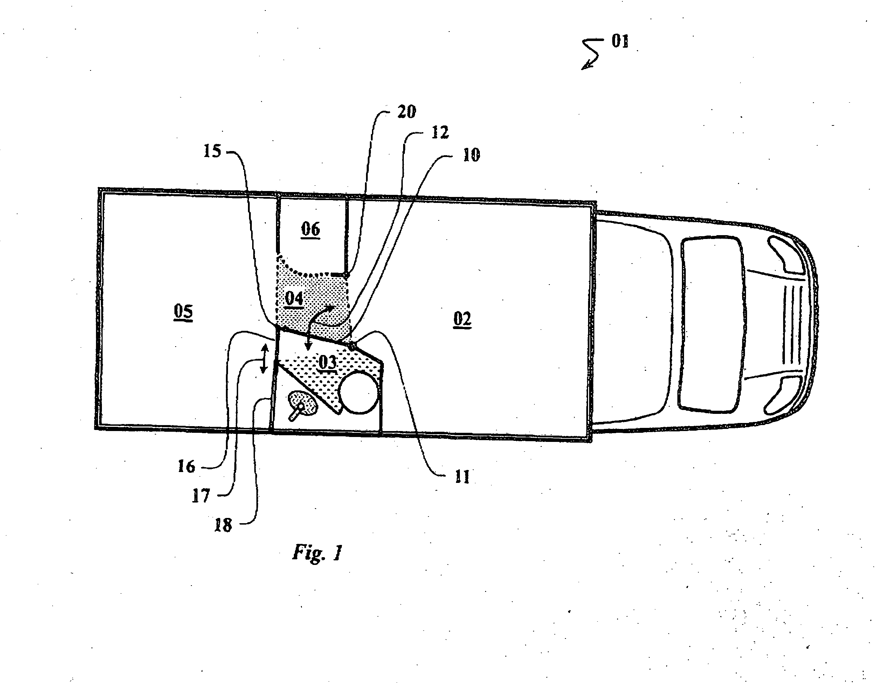

In der **Figur 1** ist ein beispielhafter Aufbau für ein Wohnmobil 01 skizziert, welcher verschiedene Bereiche 02-06 aufweist. Hierbei handelt es sich zunächst um den eigentlichen Wohnbereich 02, wobei deren Einrichtungsweise und wirkliche Nutzungsweise für die vorliegende Erfindung unerheblich ist. Am Heck des Fahrzeuges befindet sich der Schlafbereich 05, welcher gleichfalls eine beliebige Wohnverwendung aufweisen kann. Die beiden Bereichen 02 sowie 05 werden durch den Korridorbereich 04 verbunden. Über diesen Korridorbereich 04 besteht ebenso Zugang zum Sanitärbereich 03 sowie dem Duschbereich 06. Wenngleich vorliegend für den Regelfall der Sanitärereich 03 mit Waschbecken und Toilette ausgerüstet ist, ist die Aufteilung der Einrichtung im Sanitärbereich 03 sowie dem Duschbereich 06 von untergeordneter Bedeutung. Maßgeblich ist lediglich der Gesichtspunkt, dass der Sanitärbereich 03 in einer unbenutzten Situation ein möglichst geringes Raumvolumen des gesamten Fahrzeugs 01 in Anspruch nehmen soll. Zur räumlichen Abtrennung ist der Sanitärbereich 03 mit einem schwenkbaren Türelement 10 verschlossen. Drehachse ist hierbei das Türscharnier 11, welches sich im Eck von Wohn-, Sanitär- und Korridorbereich befindet. Insofern kann das Türelement 10 um das Türscharnier 11 geschwenkt werden. Die verschiedenen Schließstellungen des Türelements 10 werden in den nachfolgenden Figuren erläutert. Zumindest liegt in einer ersten Schließstellung das Türelement 10 an einem Türrahmenelement 15 an, welches an einem verschiebbaren - als erfindungswesentliches Merkmal - Trennelement 16 angeordnet ist.

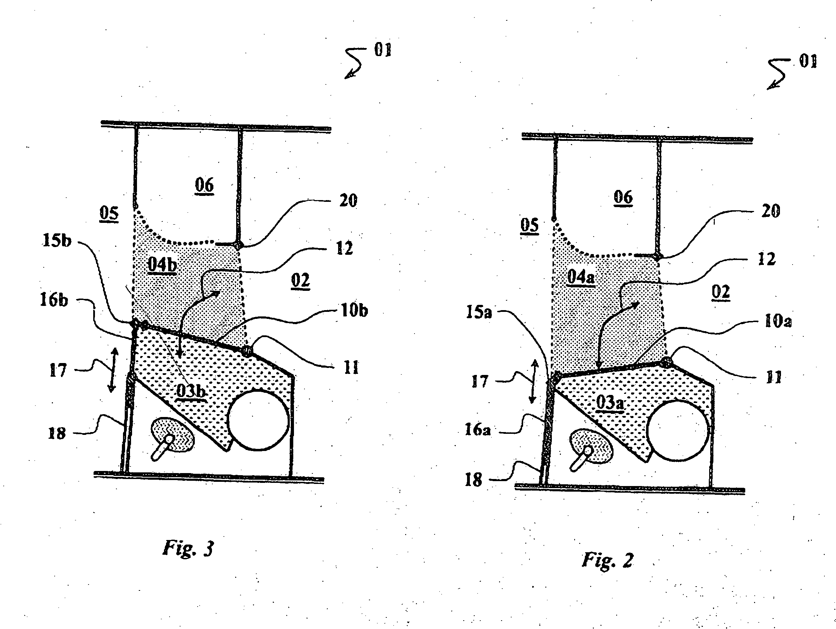

Die **Figur 2** skizziert einen Ausschnitt zur Ausführung aus Figur 1 nunmehr mit dem Türelement 10a in erster Schließstellung mit dem Trennelement 16a in der Ruhestellung. Hierbei wird, wie leicht zu erkennen ist, ein breiter Durchgang zwischen dem Duschbereich 06 und dem Sanitärbereich 03 hin zum Schlafbereich 05 gewährleistet. Weiterhin wird der Raum des Sanitärbereichs 03 auf ein geringeres Maß reduziert, welches zwar insofern keine komfortable Nutzung ermöglicht, dieses jedoch nur die Stellung im ungenutzten Zustand widerspiegelt.

Zur Verwendung des Sanitärbereichs 03b skizziert die **Figur 3** nunmehr das Türelement 10b in erster Schließstellung, bei dem das Trennelement 16b in der Nutzstellung vorgeschoben ist. Wiederum liegt das Türelement 10b am Türrahmenelement 15b an. Zu Erkennen ist der vergrößerte Sanitärbereich 03b aus Figur 3 im Gegensatz zum verkleinerten Raumvolumen 03a aus Figur 2. Wenngleich der Korridorbereich 04 in der Größe reduziert ist, ist dennoch unvermindert ein Durchgang zum Schlafbereich 05 gewährleistet.

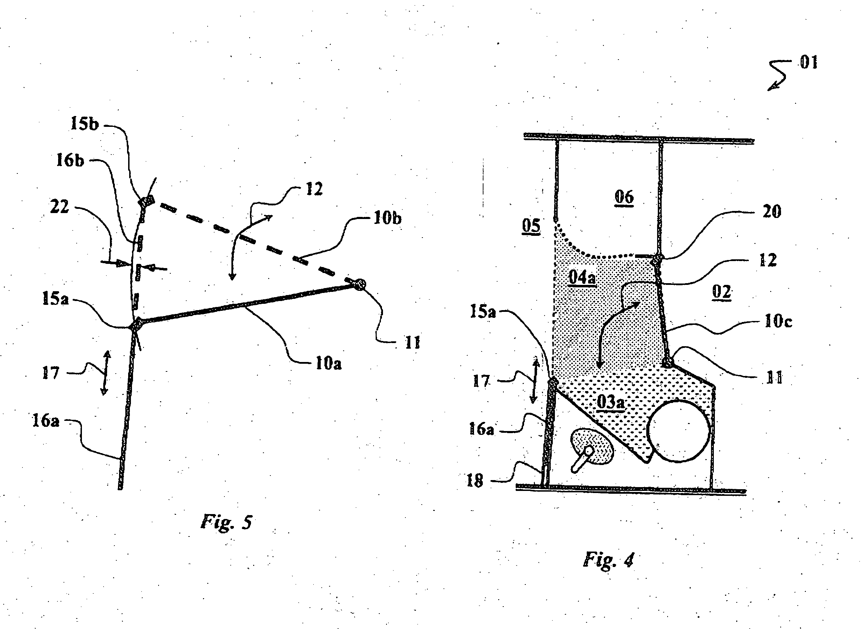

Alternativ ist es nunmehr möglich, das Türelement 10c in die zweite Schließstellung zu schwenken - siehe **Figur 4****.** Hierbei kommt das Türelement 10c am zweiten Türrahmenelement 20 zur Anlage. Hierbei erfolgt eine Trennung von Sanitär- 03a und Korridorbereich 04a vom Wohnbereich 02. Bei Nichtverwendung des Sanitärbereichs 03a bei dieser Schließstellung liegt das Trennelement 16a vorteilhaft in der Ruhestellung. Gleichfalls ist es ebenso möglich, zum optischen Sichtschutz das Trennelement 16b in die Nutzstellung zu verschieben (nicht dargestellt).

Zur Erläuterung skizziert die **Figur 5** die entstehende Segmenthöhe 22 aufgrund des Schwenkens des Türelements 10 ausgehend von einer Nutzstellung des Trennelements 16b (siehe auch Fig. 3) in die Ruhestellung des Trennelements 16a (siehe auch Fig. 2) mit dem Türrahmenelement 15b bzw. 15a. Wenngleich der Abstand zwischen dem Türscharnier 11 und dem Türrahmenelement 15b nur einer geringeren Veränderung aufgrund der Segmenthöhe 22 unterworfen ist, so gilt es dennoch diese bei der Auslegung zu berücksichtigen, wenn sichergestellt sein soll, dass in der Bewegung von der Nutzstellung in die Ruhestellung die erste Schließstellung unter Anlage des Türelements 10 am Türrahmenelement 15 gewährleistet sein soll.

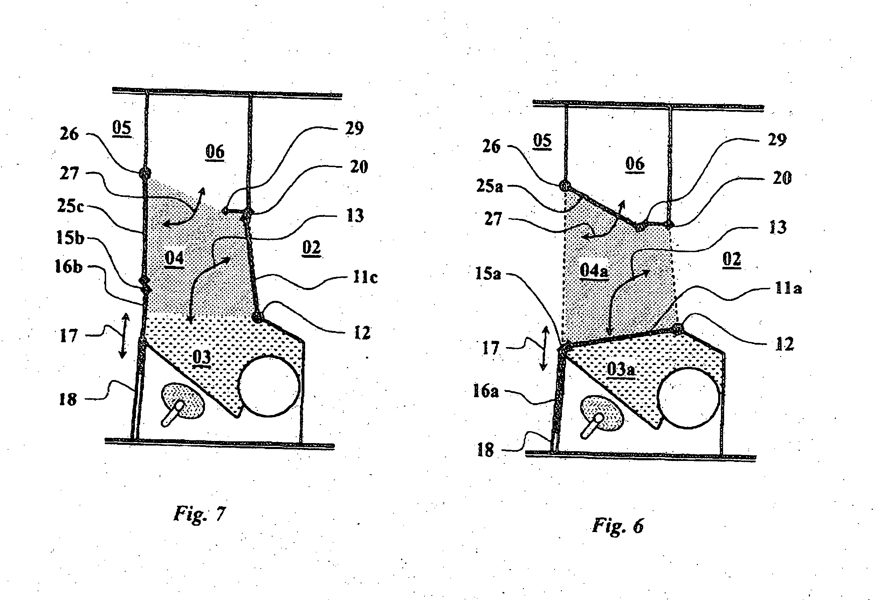

Die **Figur 6** zeigt eine Erweiterung der erfindungsgemäßen Lösung dahingehend, dass nunmehr ebenso der Duschbereich 06 mit einer Duschtür 25a versehen ist. Hierbei kann, wie skizziert, die Duschtür 25a mittels eines Türscharniers 26 im Eck von Schlaf-05, Dusch- 06 und Korridorbereich 04a geschwenkt werden. Zur Abtrennung des Duschbereiches 06 kommt die Duschtüre 25a am dritten Türrahmenelement 29 zur Anlage. Die Stellung des Türelements 10 am Sanitärbereich 03 ist hierbei zunächst unerheblich.

Die erfindungsgemäße Lösung kann nunmehr besonders vorteilhaft durch die Erweiterung dahingehend genutzt werden, dass, wie in **Figur 7** skizziert, das erste Türelement 11c in zweiter Schließstellung geschlossen wird und die Duschtür 25c zur Anlage gebracht wird mit dem in der Nutzstellung ausgeschobenen Trennelement 16b. Hierbei entstehen drei getrennte Bereiche, wobei zum einen der Wohnbereich 02 mittels Seitenwände und dem Türelement 10c getrennt ist vom Sanitär- 03, Korridor- 04 und Duschbereich 06 sowie auf anderer Seite diese mittels Seitenwände, dem Trennelement 16b und der Duschtür 25c vom Schlafbereich 05 getrennt sind. Insofern entsteht hierdurch ein, für Wohnwagenverhältnisse großzügiger Sanitär-/Duschbereich.

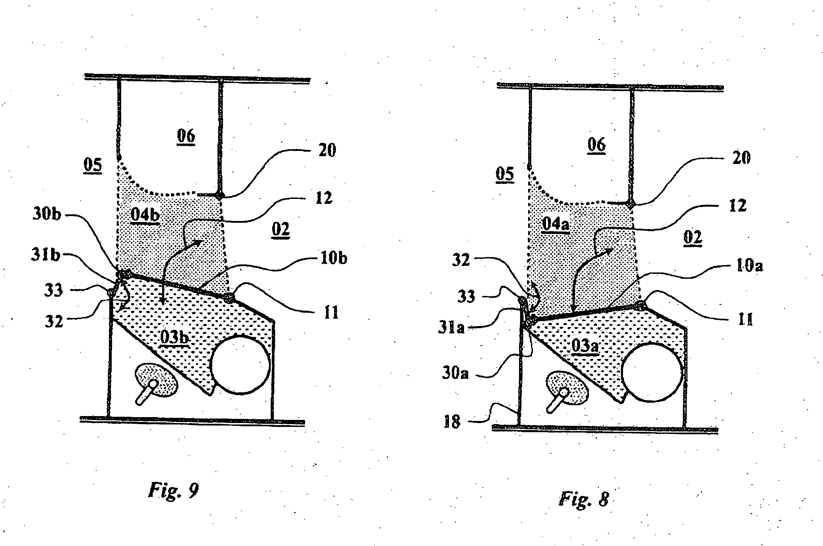

Alternativ zur Ausführung mit dem beispielhaften Trennelement 16 als Schiebetür aus den vorherigen Figuren wird in der **Figur 8** ein Trennelement 31 in Art einer Pendeltür skizziert. Hinsichtlich des Merkmals, dass das Trennelement 31 in einer zweiten Schließstellung geschlossen werden kann, sei auf die Erläuterungen zum vorherigen Ausführungsbeispiel verwiesen. Maßgeblich für dieses Ausführung ist, dass das Trennelement 31 an einem Trennelementscharnier 33 schwenkbar gelagert ist. Wie zu erkennen ist, befindet sich das Trennelementscharnier 33 im Eck der drei Bereiche Sanitärbereich 03, Korridorbereich 04 und Schlafbereich 05. Wiederum liegt in der Ruhestellung des Trennelements 31a in der ersten Schließstellung das Türelement 10a am ersten Türrahmenelement 30a an und trennt den Sanitärbereich 03a vom Korridorbereich 04a. Weiterhin ist zu erkennen, dass sich das erste Türrahmenelement 30a näher an der Fahrzeugaußenseite befindet als das Trennelementscharnier 33.

In der folgenden Figur 9 wird zur Ausführung aus Fig. 8 nunmehr das Trennelement 31b in der Nutzstellung skizziert. Erfindungsgemäß kann gleichfalls wie bei der in den vorherigen Figuren skizzierten Ausführung mit dem Trennelement 16 als Schiebetür das Türelement 10b in erster Sehließstellung am Türrahmenelement 30b anliegen und trennt den Sanitärbereich 03b mit nunmehr größerer Fläche vom nunmehr kleineren Korridorbereich 04b. Im Gegensatz zur Ruhestellung liegt in der Nutzstellung das Trennelementscharnier 33 nähe zur Fahrzeugaußenseite als das Türrahmenelement 30b des Trennelements 31b.

## Patentansprüche

1. Fahrzeug (01), insbesondere Wohnmobil oder Wohnwagen, mit einem Wohnbereich (02), einem Sanitärbereich (03) und einem am Sanitär-(03) und Wohnbereich (02) angrenzenden Korridorbereich (04), umfassend ein Türelement (10), welches mittels eines Türscharniers (11) im Eck der drei Bereiche (02, 03, 04) schwenkbar gelagert ist, wobei das Türelement (10) in einer ersten Schließstellung (10a, 10b) unter räumlicher Trennung von Sanitär- (03) und Korridorbereich (04) unter Anlage des Türelements (10a, 10b) an einem ersten Türrahmenelement (15a, 15b, 30a, 30b) geschlossen werden kann, und wobei das Türelement (10c) in einer zweiten Schließstellung unter räumlicher Trennung von Korridor- (04) und Wohnbereich (02) unter Anlage des Türelements (10c) an einem zweiten Türrahmenelement (20) geschlossen werden kann,
**dadurch gekennzeichnet,**
**dass** das erste Türrahmenelement (15, 30) an einem verschieb- und/oder schwenkbaren Trennelement (16, 31) angeordnet ist, wobei das erste Türrahmenelement (15, 30) bzw. das Trennelement (16, 31) zwischen einer zurückgesetzten Ruhestellung (16a, 31a) und einer hervorstehenden Nutzstellung (16b, 31b) verstellbar ist, wobei in Ruhestellung (16a, 31a) und in Nutzstellung (16b, 31b) das Türelement (10a, 10b) in der ersten Schließstellung geschlossen werden kann.

2. Fahrzeug (01) nach Anspruch 1,
**dadurch gekennzeichnet,**
**dass** in erster Schließstellung das Raumvolumen des Sanitärbereichs (03b) in der Nutzstellung um mindestens 10% größer ist als in der Ruhestellung (03a) und dass die frei begehbare Grundfläche des Sanitärbereichs (03b) in der Nutzstellung um mindestens 25% größer ist als in der Ruhestellung (03a).

3. Fahrzeug (01) nach Anspruch 1 oder 2,
**dadurch gekennzeichnet,**
**dass** das Trennelement (16) in und/oder an einer Seitenwandung (18) des Sanitärbereichs (03) angeordnet ist und parallel zur Seitenwandung (18) verschoben werden kann.

4. Fahrzeug (01) nach einem der Ansprüche 1 bis 3,
**dadurch gekennzeichnet,**
**dass** das Trennelement (16) in Art einer Schiebetür ausgeführt ist.

5. Fahrzeug (01) nach einem der Ansprüche 1 bis 4,
**dadurch gekennzeichnet,**
**dass** das Türscharnier (11) auf einer Mittelsenkrechten zu der Verbindungslinie zwischen dem Türrahmenelement (15) in der Ruhestellung und in der Nutzstellung angeordnet ist.

6. Fahrzeug (01) nach einem der Ansprüche 1 bis 5,
**dadurch gekennzeichnet,**
**dass** zugleich mit dem Schwenken des Türelements (10) das Trennelement (16) von der Nutzstellung (16b) in die Ruhestellung (16a) unter Beibehaltung der ersten Schließstellung (10a, 10b) verschoben werden kann.

7. Fahrzeug (01) nach Anspruch 6,
**dadurch gekennzeichnet,**
**dass** zumindest um das Maß einer Segmenthöhe (22) resultierend aus der Schwenkbewegung des Türelements (10) in erster Schließstellung (10a, 10b) sich das Türelement (10) relativ zum Türrahmenelement (15) und/oder sich das Türrahmenelement (15) relativ zum Trennelement (16) und/oder sich das Trennelement (16) bewegen kann.

8. Fahrzeug (01) nach Anspruch 1 oder 2,
**dadurch gekennzeichnet,**
**dass** das Trennelement (31) mittels eines Trennelementscharniers (33) an einem zum Korridorbereich (04) weisenden Ende einer Seitenwandung des Sanitärbereichs (03) schwenkbar angeordnet ist, wobei in der Ruhestellung das Türrahmenelement (30a) näher zur Fahrzeugaußenseite angeordnet ist als das Trennelementscharnier (33) und dass in der Nutzstellung das Trennelementscharnier (33) näher zur Fahrzeugaußenseite angeordnet ist als das Türrahmenelement (30b).

9. Fahrzeug (01) nach Anspruch 8,
**dadurch gekennzeichnet,**
**dass** das Trennelement (31) in Art einer Pendeltür ausgeführt ist.

10. Fahrzeug (01) nach Anspruch 8 oder 9,
**dadurch gekennzeichnet,**
**dass** die Schwenkbewegung (32) des Trennelements (31) in Nutz- und Ruhestellung in einer Schwenkrichtung durch das in erster Schließstellung befindliche Türelement (10a, 10b) und in anderer Schwenkrichtung durch die Anlage gegen jeweils ein Widerlager verhindert ist.

11. Fahrzeug (01) nach einem der Ansprüche 1 bis 10,
**dadurch gekennzeichnet,**
**dass** an den Korridorbereich (04) und den Sanitärbereich (03) ein Schlafbereich (05) angrenzt, wobei das Trennelement (16, 31) zwischen Sanitärbereich (03) und Schlafbereich (05) angeordnet ist.

12. Fahrzeug (01) nach Anspruch 11,
**dadurch gekennzeichnet,**
**dass** der Schlafbereich (05) durch das Trennelement (16, 31) und ein schieb- und/oder schwenk- und/oder faltbares Raumteilerelement vom Korridorbereich (04) abgetrennt werden kann.

13. Fahrzeug (01) nach einem der Ansprüche 1 bis 12,
**dadurch gekennzeichnet,**
**dass** angrenzend zum Korridorbereich (04) auf der dem Sanitärbereich (03) gegenüberliegenden Seite ein Duschbereich (06) vorhanden ist, wobei der Duschbereich (06) mittels eines schieb- und/oder schwenk- und/oder faltbares Verschlusselement (25) vom Korridorbereich (04) getrennt werden kann.

14. Fahrzeug (01) nach Anspruch 13,
**dadurch gekennzeichnet,**
**dass** das Verschlusselement eine schwenkbare Duschtür (25) ist, wobei ein Duschtürscharnier (26) im Eck von Korridor- (04), Dusch(06) und Schlafbereich (05) angeordnet ist, wobei die Duschtür (25a) in einer ersten Türstellung den Duschbereich (06) vom Korridorbereich (04a, 04b) trennt und wobei die Duschtür (25c) in einer zweiten Türstellung am ersten Türrahmenelement (15b, 30b) anliegt und mit dem Trennelement (16b, 31b) den Dusch- (06), Korridor- (04) und Sanitärbereich (03) vom Schlafbereich (05) trennt.

## Claims

1. A vehicle (01), in particular a motorhome or a trailer, having a living area (02), a sanitary area (03) and a corridor area (04) adjacent to the sanitary area (03) and to the living area (02), comprising a door element (10) that is mounted so as to swing by means of a door hinge (11) in the corner between the three areas (02, 03, 04), wherein the door element (10) can be closed in a first closed position (10a, 10b), in which it spatially separates the sanitary area (03) and the corridor area (04) and in which the door element (10a, 10b) abuts against a first door frame element (15a, 15b, 30a, 30b), and wherein the door element (10c) can be closed in a second closed position, in which it spatially separates the corridor area (04) and the living area (02) and in which the door element (10c) abuts against a second door frame element (20),
**characterized in that**
the first door frame element (15, 30) is arranged on a slidable and/or swingable separating element (16, 31), the first door frame element (15, 30) and/or the separating element (16, 31) being adjustable between a retracted idle position (16a, 31a) and an extended use position (16b, 31b), wherein, in the idle position (16a, 31a) and in the use position (16b, 31b), the door element (10a, 10b) can be closed in the first closed position.

2. The vehicle (01) according to claim 1,
**characterized in that**
in the first closed position, the room volume of the sanitary area (03b) is at least 10 % larger in the use position than in the idle position (03a) and that the freely accessible floor space of the sanitary area (03b) is at least 25 % larger in the use position than in the idle position (03a).

3. The vehicle (01) according to claim 1 or 2,
**characterized in that**
the separating element (16) is arranged in and/or on a side wall (18) of the sanitary area (03) and can be slid parallel to the side wall (18).

4. The vehicle (01) according to any of the claims 1 to 3,
**characterized in that**
the separating element (16) is realized in the manner of a sliding door.

5. The vehicle (01) according to any of the claims 1 to 4,
**characterized in that**
the door hinge (11) is arranged on a perpendicular bisector in relation to the connecting line between the door frame element (15) in the idle position and in the use position.

6. The vehicle (01) according to any of the claims 1 to 5,
**characterized in that**
simultaneously to swinging the door element (10), the separating element (16) can be slid from the use position (16b) into the idle position (16a) while maintaining the first closed position (10a, 10b).

7. The vehicle (01) according to claim 6,
**characterized in that**
the door element (10) can move relative to the door frame element (15) and/or the door frame element (15) can move relative to the separating element (16) and/or the separating element (16) can move by at least the measure of a segment height (22) resulting from the swinging motion of the door element (10) in the first closed position (10a, 10b).

8. The vehicle (01) according to claim 1 or 2,
**characterized in that**
the separating element (31) is arranged so as to swing on an end of a side wall of the sanitary area (03) by means of a separating element hinge (33), said end facing toward the corridor area (04), the door frame element (30a) in the idle position being arranged closer to the outside of the vehicle than the separating element hinge (33), and that the separating element hinge (33) in the use position is arranged closer to the outside of the vehicle than the door frame element (30b).

9. The vehicle (01) according to claim 8,
**characterized in that**
the separating element (31) is realized in the manner of a swing door.

10. The vehicle (01) according to claim 8 or 9,
**characterized in that**
the swinging motion (32) of the separating element (31) in the use position and in the idle position is prevented by the door element (10a, 10b) being in the first closed position and is prevented in the other swinging direction by abutting against a respective abutment.

11. The vehicle (01) according to any of the claims 1 to 10,
**characterized in that**
a sleeping area (05) is adjacent to the corridor area (04) and to the sanitary area (03), the separating element (16, 31) being arranged between the sanitary area (03) and the sleeping area (05).

12. The vehicle (01) according to claim 11,
**characterized in that**
the sleeping area (05) can be separated from the corridor area (04) by the separating element (16, 31) and by a slidable and/or swingable and/or foldable partition element.

13. The vehicle (01) according to any of the claims 1 to 12,
**characterized in that**
a shower area (06) is adjacent to the corridor area (04) on the side opposite of the sanitary area (03), wherein the shower area (06) can be separated from the corridor area (04) by means of a slidable and/or swingable and/or foldable closing element (25).

14. The vehicle (01) according to claim 13,
**characterized in that**
the closing element is a swingable shower door (25), a shower door hinge (26) being arranged in the corner between the corridor (04), shower (06) and sleeping areas (05), the shower door (25a) separating the shower area (06) and the corridor area (04a, 04b) in a first door position, and the shower door (25c) abutting against the first door frame element (15b, 30b) in a second door position and separating the shower (06), corridor (04) and sanitary areas (03) from the sleeping area (05) with the separating element (16b, 31b).

## Revendications

1. Véhicule (01), en particulier un camping-car ou une caravane, ayant une zone d'habitation (02), une zone sanitaire (03) et une zone de couloir (04) adjacente à la zone sanitaire (03) et à la zone d'habitation (02), comprenant un élément de porte (10) qui est monté de manière pivotant dans le coin des trois zones (02, 03, 04) au moyen d'une charnière de porte (11), l'élément de porte (10) étant fermable dans une première position fermée (10a, 10b) en séparant spatialement la zone sanitaire (03) et la zone de couloir (04), l'élément de porte (10a, 10b) s'appliquant contre un premier élément de cadre de porte (15a, 15b, 30a, 30b), et l'élément de porte (10c) étant fermable dans une deuxième position fermée en séparant spatialement la zone de couloir (04) et la zone d'habitation (02), l'élément de porte (10c) s'appliquant contre un deuxième élément de cadre de porte (20),
**caractérisé en ce que**
le premier élément de cadre de porte (15, 30) est disposé sur un élément séparateur (16, 31) déplaçable et/ou pivotable, le premier élément de cadre de porte (15, 30) et/ou l'élément séparateur (16, 31) étant ajustable entre une position de repos reculée (16a, 31a) et une position d'usage saillante (16b, 31b), l'élément de porte (10a, 10b) pouvant être fermé dans la première position fermée en position de repos (16a, 31a) et en position d'usage (16b, 31b).

2. Véhicule (01) selon la revendication 1,
**caractérisé en ce que**
dans la première position fermée, le volume d'espace de la zone sanitaire (03b) est supérieur d'au moins 10 % en position d'usage qu'en position de repos (03a) et que la surface de base librement accessible de la zone sanitaire (03b) est supérieure d'au moins 25 % en position d'usage qu'en position de repos (03a).

3. Véhicule (01) selon la revendication 1 ou la revendication 2,
**caractérisé en ce que**
l'élément séparateur (16) est disposé dans et/ou sur une paroi latérale (18) de la zone sanitaire (03) et peut être déplacé parallèlement à la paroi latérale (18).

4. Véhicule (01) selon l'une quelconque des revendications 1 à 3,
**caractérisé en ce que**
l'élément séparateur (16) est réalisé sous la forme d'une porte coulissante.

5. Véhicule (01) selon l'une quelconque des revendications 1 à 4,
**caractérisé en ce que**
la charnière de porte (11) est disposée sur la médiatrice par rapport à la ligne de liaison entre l'élément de cadre de porte (15) en position de repos et en position d'usage.

6. Véhicule (01) selon l'une quelconque des revendications 1 à 5,
**caractérisé en ce que**
simultanément au pivotement de l'élément de porte (10), l'élément séparateur (16) peut être déplacé à partir de la position d'usage (16b) dans la position de repos (16a) en maintenant la première position fermée (10a, 10b).

7. Véhicule (01) selon la revendication 6,
**caractérisé en ce que**
l'élément de porte (10) peut se déplacer par rapport à l'élément de cadre de porte (15) et/ou l'élément de cadre de porte (15) peut se déplacer par rapport à l'élément séparateur (16) et/ou l'élément séparateur (16) peut se déplacer par au moins la mesure d'une hauteur de segment (22) résultant du mouvement pivotant de l'élément de porte (10) dans la première position fermée (10a, 10b).

8. Véhicule (01) selon la revendication 1 ou la revendication 2,
**caractérisé en ce que**
l'élément séparateur (31) est disposé de manière pivotant à une extrémité d'une paroi latérale de la zone sanitaire (03) au moyen d'une charnière (33) d'élément séparateur, l'extrémité étant orientée vers la zone de couloir (04), l'élément de cadre de porte (30a) en position de repos étant disposé plus près de l'extérieure du véhicule que la charnière (33) de l'élément séparateur, et que la charnière (33) de l'élément séparateur en position d'usage est disposée plus près de l'extérieure du véhicule que l'élément de cadre de porte (30b).

9. Véhicule (01) selon la revendication 8,
**caractérisé en ce que**
l'élément séparateur (31) est réalisé sous la forme d'une porte battante.

10. Véhicule (01) selon la revendication 8 ou la revendication 9,
**caractérisé en ce que**
le mouvement pivotant (32) de l'élément séparateur (31) en position d'usage et en position de repos est empêché dans une direction de pivotement par l'élément der porte (10a, 10b) situé en première position fermée et dans l'autre direction de pivotement par l'appui contre une butée respective.

11. Véhicule (01) selon l'une quelconque des revendications 1 à 10,
**caractérisé en ce qu'**
une zone de couchage (05) est adjacente à la zone de couloir (04) et à la zone sanitaire (03), l'élément séparateur (16, 31) étant disposé entre la zone sanitaire (03) et la zone de couchage (05).

12. Véhicule (01) selon la revendication 11,
**caractérisé en ce que**
la zone de couchage (05) peut être séparée de la zone de couloir (04) par l'élément séparateur (16, 31) et par un élément de séparation de pièce déplaçable et/ou pivotable et/ou pliable.

13. Véhicule (01) selon l'une quelconque des revendications 1 à 12,
**caractérisé en ce qu'**
il y a une zone de douche (06) adjacente à la zone de couloir (04) du côté opposé de la zone sanitaire (03), la zone de douche (06) pouvant être séparée de la zone de couloir (04) au moyen d'un élément de fermeture (25) déplaçable et/ou pivotable et/ou pliable.

14. Véhicule (01) selon la revendication 13,
**caractérisé en ce que**
l'élément de fermeture est une porte de douche (25) pivotable, une charnière (26) de porte de douche étant disposée dans le coin de la zone de couloir (04), de douche (06) et de couchage (05), la porte de douche (25a) séparant la zone de douche (06) de la zone de couloir (04a, 04b) en une première position de porte et la porte de douche (25c) s'appliquant contre le premier élément de cadre de porte (15b, 30b) en une deuxième position de porte et séparant la zone de douche (06), de couloir (04) et sanitaire (03) de la zone de couchage (05) avec l'élément séparateur (16b, 31b).
